# FASCICULE DE BREVET EUROPEEN

(11) **EP 2 676 130 B1**
(45) Date de publication et mention de la délivrance du brevet: **22.11.2017**
(21) Numéro de dépôt: 12704074.9
(22) Date de dépôt: 14.02.2012
(51) Int. Cl.: G01N 29/04, G01N 29/24, G01N 21/17

(54) **DISPOSITIF ET PROCÉDÉ DE CONTRÔLE NON DESTRUCTIF PAR ULTRASON UTILISANT UN LASER**
VORRICHTUNG UND VERFAHREN ZUR ZERSTÖRUNGSFREIEN ULTRASCHALLPRÜFUNG MITTELS EINES LASERS
DEVICE AND METHOD FOR ULTRASONIC NONDESTRUCTIVE TESTING USING A LASER

(30) Priorité: 14.02.2011 FR 1151183
(43) Date de publication de la demande: 25.12.2013
(73) Titulaire: Airbus (S.A.S.), 31700 Blagnac (FR)
(72) Inventeur: VOILLAUME, Hubert, F-92130 Issy Les Moulineaux (FR); CAMPAGNE, Benjamin, 44800 Saint Herblain (FR)
(74) Mandataire: Ipside
(86) Numéro de dépôt international: PCT/EP2012/052481
(87) Numéro de publication internationale: WO 2012/110492

(56) Documents cités:
- US-A1- 2008 316 498
- US-A1- 2009 168 074
- CAMPAGNE BENJAMIN ET AL: "Compact and fast response ultrasonic detection device based on two-wave mixing in a gallium arsenide photorefractive crystal", REVIEW OF SCIENTIFIC INSTRUMENTS, AIP, MELVILLE, NY, US, vol. 72, no. 5, 1 mai 2001 (2001-05-01), pages 2478-2482, XP012039153, ISSN: 0034-6748, DOI: 10.1063/1.1361084

## Description

L'invention concerne un dispositif et un procédé de contrôle non destructif par ultrason utilisant un laser. L'invention est plus particulièrement adaptée au contrôle d'une pièce structurale constituée d'un matériau composite à renfort fibreux, ladite pièce comportant notamment des assemblages selon diverses techniques de collage ou de soudage. À titre d'exemple, non limitatif, le dispositif et le procédé selon l'invention permettent de contrôler des pièces comprenant des panneaux composites assemblés en nid-d'abeilles, ou des structures composites recevant des revêtements, tels que des plaques en céramique. Les applications de l'invention sont principalement, mais non exclusivement, adaptées au contrôle de pièces structurales de grandes dimensions dans le domaine aéronautique ou aérospatial.

Il est connu de l'art antérieur d'utiliser des techniques de contrôle non destructif basées sur l'analyse de la propagation d'ondes ultrasonores dans un milieu constituant une pièce. Les dispositifs de contrôle de ce type comportent des moyens générateurs d'une onde ultrasonore, couplés acoustiquement à la pièce, pour y transmettre une onde mécanique, et des moyens de détection pour mesurer les caractéristiques de propagation de cette onde. La présence de discontinuités dans le milieu de propagation crée des échos ou des atténuations de l'onde, ces discontinuités peuvent ainsi être détectées. Des exemples de discontinuités sont des trous, des délaminages, des variations de densité etc. Le réglage de la sensibilité de détection permet de détecter les discontinuités susceptibles de refléter des défauts nuisibles à la qualité de la pièce ainsi contrôlée. La fréquence de l'onde ultrasonore permet également de discriminer les discontinuités selon leur nature.

Dans le cas d'une pièce comportant des assemblages, il existe des discontinuités de fait aux interfaces entre les différents éléments constituant l'assemblage. Ainsi, il est difficile de contrôler au cours de la même opération, la présence de défauts, ou discontinuités, à l'intérieur des éléments assemblés et la cohésion de l'interface d'assemblage lesquels ne sont pas révélés par les mêmes fréquences d'onde. Ainsi les défauts de cohésion aux interfaces influencent les propagations des grandes longueurs d'onde, c'est-à-dire des basses fréquences, dans la gamme du kilohertz (10³ hertz ou kHz) alors que les défauts intrinsèques des pièces influencent plutôt les propagations des courtes longueurs d'onde, c'est-à-dire des hautes fréquences de l'ordre du mégahertz (10⁶ Hertz ou MHz). Il y a corrélation entre la dimension moyenne des défauts détectés et la longueur d'onde du signal acoustique qui permet leur détection.

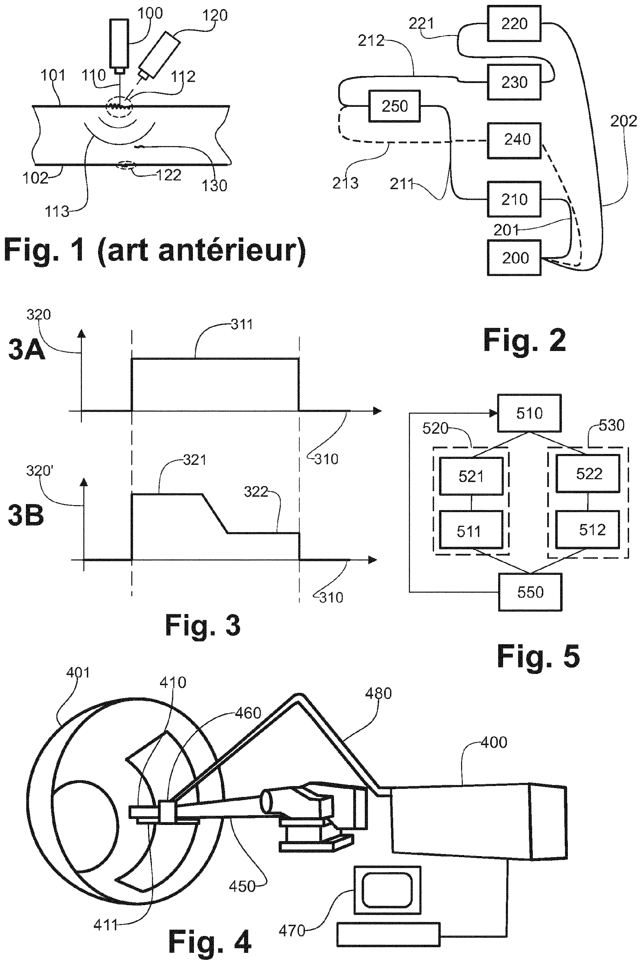

Il est également connu de l'art antérieur d'utiliser pour la génération de l'onde ultrasonore une impulsion photo-élastique à la surface de la pièce au moyen d'un faisceau laser, dit d'excitation. La figure 1, relative à l'art antérieur, illustre schématiquement ce principe. Le contrôle ultrasonore d'une pièce par ce procédé consiste à produire une perturbation localisée (112) à la surface (101) d'une pièce (100) par effet photo-élastique exposant une petite surface de la pièce à l'énergie délivrée sous forme impulsionnelle par un faisceau laser (110) d'excitation généré par une source (100) adaptée, par exemple un laser de type TEA CO₂. Cette perturbation de la surface (101) produit une onde mécanique (113) qui se propage de manière élastique dans la pièce, à la vitesse du son dans le milieu constituant ladite pièce. L'excitation impulsionnelle de la surface crée une sollicitation de la pièce selon un large spectre de fréquences. Un second faisceau laser, dit de détection, éclaire la surface dans une zone cible, généralement proche ou confondue avec la zone d'excitation, selon une durée d'impulsion donnée. Le faisceau est réfléchi par la surface et modifié par les vibrations de celle-ci lesquelles vibrations peuvent être mesurées par un interféromètre. En présence d'un défaut (130) à l'intérieur de la pièce, une partie de l'onde élastique (113) va se réfléchir sur ce défaut (130), onde réfléchie qui, en se propageant, atteint de nouveau la surface (101) d'émission où elle peut être détectée par le dispositif de mesure (120), de même que ce dispositif de mesure (120) détecte l'écho de fond, correspond à la réflexion de l'onde élastique (113) sur la surface opposée (102) de la pièce (100). L'onde réfléchie sur le défaut (130) rejoint la surface d'émission (101) avant l'écho de fond, de sorte que la mesure d'une perturbation de la surface (101) avant le retour de l'écho de fond atteste de la présence d'une discontinuité, et la mesure du temps séparant la mesure de cette déformation de surface de l'instant de l'impulsion initiale (112) permet de déterminer la profondeur du défaut (130) par rapport à la surface d'émission (101). Les longueurs d'onde acoustique analysées dépendent de l'impulsion du faisceau de détection et de la bande passante de l'interféromètre.

Il est également connu de l'art antérieur l'utilisation d'un interféromètre photoréfractif à deux ondes, couramment désigné par interféromètre TWM, comme acronyme de l'expression anglaise « *Two Wave Mixing* ». Ce type d'interféromètre utilise un cristal photoréfractif lequel cristal est excité, ou pompé, par un faisceau dit de référence. La réflexion du faisceau signal de détection à la surface de la pièce est également dirigée vers le cristal photoréfractif ou les deux faisceaux interfèrent. À cette fin, une petite partie de la puissance du faisceau de détection est dérivée pour être utilisée comme pompe pour l'interféromètre TWM L'utilisation d'une partie du faisceau laser de détection lui-même comme référence permet de disposer d'une référence toujours en accord avec ledit faisceau laser de détection. L'interféromètre TWM présente l'avantage d'avoir une sensibilité sensiblement constante sur une large plage de fréquence, du kHz au MHz. Ainsi, en modulant les caractéristiques, notamment l'intensité, du faisceau signal de référence il est possible de mesurer la réponse de la pièce à l'excitation produite par le faisceau d'excitation pour différentes plages de fréquence et, par suite, de contrôler des pièces assemblées tant sur le plan de leurs défauts intrinsèques, à haute fréquence, que sur le plan de la cohésion des interfaces d'assemblage à fréquence plus basse. Dans la suite nous désignons conventionnellement les défauts tels que des délaminages de fibres pour une pièce constituée d'un matériau composite, dits défauts intrinsèques, car ils se situent à l'intérieur d'une même pièce et sont détectés par l'analyse de fréquence dans le domaine du MHz, selon une technique courante et répandue dans le contrôle non destructif par ultrasons. Nous désignons par cohésion d'interface des défauts qui se produisent notamment à l'interface entre deux milieux ou deux pièces différentes lesquels défauts sont couramment détectés par des contrôles non destructifs à basse fréquence, couramment désignés par le terme anglo-saxon de « *Tap Testing ».* Ce contrôle non destructif consiste à solliciter la structure par une percussion à l'aide d'un marteau léger, généralement instrumenté, et à en analyser la réponse acoustique, soit à l'oreille, soit par un analyseur de spectre, en comparant la réponse de la structure sollicitée avec celle d'une structure de référence. Cette procédure permet de détecter des défauts de cohésion qui affectent la réponse acoustique de la structure dans son ensemble, c'est-à-dire dans une plage de fréquence de l'ordre du kHz.

Selon ce procédé de l'art antérieur, un premier balayage de la pièce est, par exemple, réalisé en utilisant une détection haute fréquence, puis, les caractéristiques du faisceau de détection sont modifiées, de sorte à réaliser une détection basse fréquence, et un nouveau balayage de la pièce est réalisé avec ces nouvelles conditions.

Le document US 2008/0316498 décrit un dispositif et un procédé pour le contrôle non destructif d'une pièce, notamment constituée d'un matériau composite, lequel procédé utilise des ultrasons générés par une impulsion laser à la surface de la pièce, et des moyens de génération d'un faisceau laser de détection et d'un faisceau laser de référence utilisant la même source.

Le document US 2009/0168074 décrit un procédé et un dispositif aptes à réaliser un contrôle de type « tap test » à partir d'une excitation par une impulsion laser de la surface.

Aucun de ces procédés ou dispositifs de l'art antérieur ne divulgue un procédé ou un dispositif pour la réalisation simultanée des deux types de contrôles au cours d'un même éclairement de la zone ciblée par le test.

L'invention consiste en un dispositif pour le contrôle non destructif d'une pièce, notamment constituée d'un matériau composite à renfort fibreux, lequel dispositif comprend :
a. un générateur d'un faisceau laser dit d'excitation et des moyens pour produire une sollicitation photo-élastique de la surface de la pièce, dans une zone d'excitation à l'aide de ce faisceau laser ;
b. des moyens pour générer un premier faisceau laser dit de détection apte à éclairer la pièce dans une zone cible ;
c. des moyens pour générer un deuxième faisceau laser de détection, dit de référence, et dont une caractéristique peut être réglée indépendamment des caractéristiques du faisceau laser de détection ;
d. un détecteur photoréfractif à deux ondes comportant un cristal photoréfractif pompé par le faisceau laser de référence ;
e. des moyens pour collecter le faisceau réfléchi par la zone cible du premier laser de détection et le conduire dans le détecteur photoréfractif ;
f. des moyens de génération comprenant une source unique de type laser monolithique à fréquence unique stabilisée de type Nd:YAG pompé par diode et deux lasers amplificateurs distincts pour générer, à partir de cette source, le faisceau laser de détection (211) et le faisceau laser de référence (221); et
g. des moyens pour modifier, au cours d'une impulsion du faisceau de détection, au moins une caractéristique du faisceau laser de référence de sorte à ajuster la bande passante du détecteur photoréfractif entre une première fréquence de coupure basse supérieure à 1 MHz et une deuxième fréquence de coupure basse inférieure ou égale à 10 kHz.

Ainsi, le dispositif objet de l'invention permet de faire varier les caractéristiques du faisceau laser de référence utilisé comme pompe du détecteur TWM sans modifier les caractéristiques du faisceau de détection, de sorte que la détection à haute fréquence et la détection à basse fréquence peuvent être réalisées l'une après l'autre en un temps très bref au cours de la même mesure. Un seul balayage permet alors de contrôler intégralement la pièce assemblée de sorte que la productivité du dispositif est au moins le double de celle des dispositifs connus de l'art antérieur. Le type de source permet de délivrer une fréquence très stabilisée et est ainsi particulièrement bien adapté comme laser maître pour une amplification monofréquence ultérieure, et dans le cas du dispositif objet de l'invention, pour une double amplification. Ce type de source est également adapté pour une utilisation dans un interféromètre de type Fabry-Pérot confocal. Ainsi, ces caractéristiques sont mises avantageusement à profit pour générer les deux faisceaux laser, de détection et de référence, à partir de deux amplificateurs distincts de ladite source. Ainsi, en partant d'une source laser unique, le dispositif objet de l'invention permet de générer trois types de faisceaux de détection permettant d'utiliser, selon les circonstances et le type de mesure envisagée, un interféromètre confocal ou l'interféromètre TWM et en modifiant si nécessaire la bande passante de l'interféromètre TWM et le tout de manière automatique.

L'invention peut être mise en oeuvre selon les modes de réalisation avantageux exposés ci-après, lesquels peuvent être considérés individuellement ou selon toute combinaison techniquement opérante.

Avantageusement, le dispositif objet de l'invention comprend des moyens pour déplacer le faisceau laser d'excitation et le premier faisceau laser de détection à la surface de la pièce de sorte à réaliser un balayage de la surface de celle-ci. Il est remarquable que le dispositif objet de l'invention ne modifie pas la partie réalisant le balayage de la surface de la pièce de sorte que le dispositif objet de l'invention peut être facilement adapté à un dispositif de contrôle de l'art antérieur en lui adjoignant des moyens pour générer et piloter le faisceau laser de référence de sorte à contrôler le pompage du cristal photoréfractif. Ces moyens sont fixes et ne modifient pas la tête de balayage d'une installation comprenant conventionnellement un laser d'excitation et un laser de détection.

Avantageusement, les moyens de modification du faisceau laser de référence agissent sur l'intensité dudit faisceau. Ainsi la modification des conditions de mesure est réalisée de manière simple en pilotant l'amplification du faisceau laser de référence.

Selon un mode de réalisation avantageux, le dispositif objet de l'invention comprend en outre un interféromètre de type Fabry-Pérot confocal. Ce type d'interféromètre ne présente pas une plage aussi large de fréquences de mesure que l'interféromètre TWM, en revanche, il est plus précis et plus sensible que celui-ci et permet notamment de réaliser des mesures relatives à la présence de défauts intrinsèques.

L'invention concerne également un procédé de contrôle non destructif pour le contrôle d'une pièce, notamment constituée d'un matériau composite à renfort fibreux, utilisant le dispositif objet de l'invention selon l'un quelconque de ses modes de réalisation exposés ci-avant et comprenant les étapes consistant à :
a. produire une excitation photo-élastique de la surface de la pièce à l'aide du laser d'excitation ;
b. mesurer la réponse à cette excitation dans la zone cible éclairée par le faisceau laser de détection en pompant l'interféromètre photo réactif avec un signal de référence tel que la mesure soit réalisée avec une première fréquence de coupure basse supérieure à 1 MHz ;
c. modifier le faisceau de référence de sorte à réaliser une mesure interférométrique à l'aide de l'interféromètre photoréfractif avec une deuxième fréquence de coupure inférieure à la première fréquence de coupure ;
   l'éclairement (311) de la zone cible par le faisceau laser de détection étant continu durant les étapes a/ à c/.

Ainsi, la combinaison du dispositif et du procédé objet de l'invention permet de réaliser en un point de mesure différents types de contrôle, en optimisant la fréquence de coupure pour détecter des défauts particuliers, ces mesures étant réalisée dans une même séquence d'éclairement de la zone cible par le laser de détection. Ainsi, la mesure étant rapide, le procédé objet de l'invention permet d'atteindre une productivité élevée pour le contrôle d'une pièce susceptible de faire apparaître les deux types de défauts visés. La deuxième fréquence de coupure est inférieure ou égale à 10 kHz. Ainsi, il est possible de combiner un contrôle par ultrasons des défauts intrinsèques et un contrôle de la cohésion d'interface en un même point de mesure et ceci de manière automatisée.

Avantageusement, les étapes a/ à c/ du procédé objet de l'invention sont répétées pour un deuxième point à la surface de la pièce. Ainsi, outre le fait d'automatiser la mesure, cette coopération entre le dispositif et le procédé permet de résoudre une des principales insuffisances de l'art antérieur concernant le contrôle par la réponse acoustique globale, à savoir que ce mode de contrôle est avant tout considéré comme qualitatif car ne permettant pas de qualifier l'ampleur des défauts de cohésion détectés et leur localisation. La prise de mesure avec une analyse selon de multiples plages de fréquence et en de nombreux points de la pièce, de manière automatisée, ouvre la possibilité, par un traitement informatisé du signal, de dresser une cartographie complète tant des défauts intrinsèques que de la cohésion d'interface.

Selon un mode de réalisation avantageux, le procédé objet de l'invention comprend une étape consistant à mesurer la réponse de la pièce dans la zone cible avec l'interféromètre de type Fabry-Pérot avec une fréquence de coupure basse supérieure ou égale à 1 MHz.

L'invention est décrite ci-après selon ses modes de réalisation préférés, nullement limitatifs et en référence aux figures 1 à 5 dans lesquelles :
- la figure 1 relative à l'art antérieur représente schématiquement de face et en coupe le principe d'un dispositif de contrôle non destructif par ultrason d'une pièce utilisant une impulsion photo-élastique pour l'excitation à la surface de ladite pièce et un laser de détection pointé sur cette même surface pour en mesurer la réponse ;
- la figure 2 est un schéma synoptique d'un mode de réalisation du dispositif objet de l'invention ;
- la figure 3, représente les chronogrammes de fonctionnement du laser de détection et du laser de référence utilisé pour pomper le cristal photoréfractif du détecteur TWM ;
- la figure 4 montre un exemple de réalisation en perspective du dispositif objet de l'invention utilisé pour le contrôle d'une structure aéronautique assemblée ;
- et la figure 5 représente un organigramme du procédé objet de l'invention.

Figure 2, selon un exemple de réalisation, le dispositif de détection objet de l'invention comprend un oscillateur (200) monolithique à fréquence unique ou MISER pour l'acronyme anglo-saxon de « *Monolithic Isolated Single-mode End-pumped Ring »* connu de l'art antérieur. Typiquement cet oscillateur utilise un cristal Nd:YAG pompé par diode d'une longueur d'onde de 1,064 µm (1,064.10⁻⁶ m). Cette source très stable, d'une puissance de l'ordre de 200 mW, est utilisée comme laser maître et est dirigée vers deux amplificateurs lasers (210, 220) distincts. Le premier amplificateur est préférentiellement un système par lampe flash dans un barreau Nd:YAG. Il reçoit plus de 95 % de la puissance (201) du laser maître et fournit après amplification le faisceau laser de détection (211). Ledit faisceau laser de détection (211) délivre des impulsions de 30.10⁻⁶ à 300.10⁻⁶ secondes pour une énergie de l'ordre de 50.10⁻³. J par impulsion. Ce faisceau laser de détection (211) éclaire la zone cible à la surface de la pièce selon une tache d'un diamètre de l'ordre de 5 mm, il est dirigé vers les moyens de balayage (250) où il suit le faisceau laser d'excitation. La réflexion (212) du faisceau laser de détection (211) par la surface de la pièce est collectée et dirigée vers l'interféromètre TWM (230).

Le deuxième amplificateur est préférentiellement un amplificateur à fibre pompé par diode laser dans une fibre optique dopée Yb:YAG. Il reçoit moins de 5 % de la puissance (202) initiale du laser maître. Le faisceau laser (221) qui en résulte est utilisé comme faisceau laser de référence, dirigé vers l'interféromètre TWM (230).

Alternativement la réflexion (213) du laser de détection à la surface de la pièce peut être collectée et dirigée vers un interféromètre de type Fabry-Pérot confocal (240).

Figure 3, l'observation de la variation d'intensité (320,320') du faisceau laser de détection (311), figure 3A, et du faisceau laser de référence (321, 322), figure 3B, en fonction du temps (310), montre le pilotage synchronisé des deux lasers au cours d'une impulsion du laser maître. Au cours d'une telle impulsion et selon cet exemple de réalisation, le laser de détection éclaire la pièce dans la zone cible selon une intensité (320) sensiblement constante, ainsi la quantité de lumière réfléchie par la surface est toujours suffisante pour assurer la mesure. En revanche, l'intensité du laser de référence, utilisé comme pompe du cristal photoréfractif du détecteur TWM, est pilotée et, par exemple, utilisée à son intensité maximale (321) durant la première partie de l'impulsion du laser de détection puis à une intensité plus faible (322) durant une autre portion de l'impulsion (311) du laser de détection. Ainsi, durant ladite première partie (321), l'interféromètre TWM présentera une fréquence de coupure basse élevée, de l'ordre du MHz et sera utilisé pour la révélation des défauts intrinsèques de la pièce contrôlée, puis, au cours de ladite seconde portion (322) la fréquence de coupure basse de l'interféromètre est réduite, dans la gamme du kHz, et permet ainsi de révéler les défauts de cohésion de l'assemblage contrôlé selon une méthode s'apparentant au tap testing. Durant toute cette impulsion (311), l'intensité d'éclairement de la zone cible est continue. Selon un mode de réalisation préférentiel, l'intensité d'éclairement de la zone cible est sensiblement constante, mais d'autres profils d'intensité d'éclairement peuvent être utilisés.

Figure 4, selon un exemple de réalisation, le dispositif objet de l'invention est adapté au contrôle non destructif selon les deux méthodes simultanées de pièces de grande dimension notamment de pièces constituant la structure d'un aéronef (401). Selon cet exemple de réalisation, un porte-effecteur (460) reçoit une première tête laser (410) de type TEA CO2, dite d'excitation, pour générer une impulsion photo-élastique à la surface de la pièce (401) objet du contrôle. Le laser CO2 est produit par un générateur (400) et convoyé jusqu'à la tête (410) par des moyens (480) connus de l'art antérieur.

Le porte-effecteur (460) supporte également la tête laser (411), dite de détection, pour la mesure en interférométrie des déformations de la surface.

Le porte-effecteur (460) est supporté par un bras (450) robotisé qui permet de réaliser le balayage de la surface à contrôler. Un dispositif informatique (470) permet de piloter le déplacement du bras robotisé, de piloter l'amplificateur du laser de référence, et de réaliser le traitement et l'acquisition des mesures. Le pilotage du bras robotisé est réalisé à partir d'un fichier de description numérique de la surface de la pièce contrôlée (401) couramment à partir de la maquette numérique de ladite pièce.

Figure 5, selon un mode de réalisation du procédé objet de l'invention, celui-ci comprend une première étape (510) consistant à produire une excitation photo-élastique de la surface de la pièce à contrôler à l'aide du laser d'excitation. La réponse de la pièce à cette excitation est mesurée à l'aide du laser de détection. Selon une première étape de mesure (520) le laser de référence est réglé (521) sur un premier niveau d'intensité de sorte à réaliser une mesure (511) interférométrique avec une bande passante présentant une fréquence de coupure basse de l'ordre du MHz. Selon une deuxième étape de mesure (530) le laser de référence est réglé (522) sur un deuxième niveau d'intensité, inférieur au premier dans cet exemple de réalisation, de sorte réaliser une deuxième mesure (512) interférométrique avec une bande passante présentant une fréquence de coupure basse inférieure à la première. Les faisceaux lasers sont alors déplacés (550) en un autre point de mesure et le cycle d'excitation-mesure (510 à 530) est à nouveau répété.

La description ci-avant montre clairement que l'invention atteint les objectifs visés, en particulier elle permet de réaliser de manière automatique une cartographie complète d'une pièce assemblée combinant des mesures par ultrasons relatives à la santé matière, ou défauts intrinsèques, et à la cohésion des interfaces d'assemblage, selon une méthode similaire dans son principe au tap testing mais qui apporte à ce procédé de contrôle la capacité de localisation et de cartographie des défauts de cohésion.

## Revendications

1. Dispositif pour le contrôle non destructif d'une pièce, notamment constituée d'un matériau composite à renfort fibreux, comprenant:
a - un générateur (400) d'un faisceau laser dit d'excitation et des moyens (410) pour produire une sollicitation photo-élastique de la surface de la pièce (401), dans une zone d'excitation à l'aide de ce faisceau laser ;
b - des moyens (200, 210) pour générer un premier faisceau laser (211) dit de détection apte à éclairer la pièce (401) dans une zone cible ;
c - des moyens (200, 220) pour générer un deuxième faisceau laser de détection, dit de référence (221), et dont une caractéristique peut être réglée indépendamment des caractéristiques du faisceau laser de détection (211) ;
d - un interféromètre photoréfractif à deux ondes (230) comportant un cristal photoréfractif pompé par le faisceau laser de référence (221) ;
e - des moyens pour collecter le faisceau réfléchi par la zone cible du premier laser de détection et le conduire dans l'interféromètre photoréfractif (230) ;
f - des moyens de génération comprenant une source unique constituée d'un oscillateur monolithique à fréquence unique stabilisée de type Nd:YAG pompé par diode et deux lasers amplificateurs (210, 220) distincts pour générer, à partir de cette source (200), le faisceau laser de détection (211) et le faisceau laser de référence (221); et
g - des moyens pour modifier, au cours d'une impulsion du faisceau de détection, au moins une caractéristique du faisceau laser de référence (221) de sorte à ajuster la bande passante de l'interféromètre photoréfractif (230) entre une première fréquence de coupure basse supérieure ou égale à 1 MHz et une deuxième fréquence de coupure basse inférieure à 10 kHz.

2. Dispositif selon la revendication 1, **caractérisé en ce qu'**il comprend des moyens de balayage (250, 450) pour déplacer le faisceau laser d'excitation et le premier faisceau laser de détection (211) à la surface de la pièce (401) de sorte à réaliser un balayage de la surface de celle-ci.

3. Dispositif selon la revendication 1, **caractérisé en ce que** les moyens de modification du faisceau laser de référence agissent sur l'intensité dudit faisceau.

4. Dispositif selon la revendication 1, **caractérisé en ce qu'**il comprend en outre un interféromètre de type Fabry-Pérot confocal (230).

5. Procédé pour le contrôle d'une pièce, notamment constituée d'un matériau composite à renfort fibreux, utilisant un dispositif selon la revendication 1, comprenant les étapes consistant à :
a - produire (510) une excitation photo-élastique de la surface de la pièce à l'aide du laser d'excitation ;
b - mesurer (520) la réponse à cette excitation dans la zone cible éclairée par le faisceau laser (211) de détection en pompant l'interféromètre photoréfractif avec un signal de référence tel que la mesure soit réalisée avec une première fréquence de coupure basse supérieure à 1 MHz ;
c - modifier (521) le faisceau de référence de sorte à réaliser une mesure interférométrique (530) à l'aide de l'interféromètre photoréfractif avec une deuxième fréquence de coupure inférieure à la première fréquence de coupure ; l'éclairement (311) de la zone cible par le faisceau laser de détection étant continu durant les étapes a/ à c/.

6. Procédé selon la revendication 5, **caractérisé en ce que** l'intensité (311) d'éclairement de la zone cible est constante durant les étapes a/ à c/.

7. Procédé selon la revendication 5, utilisant un dispositif selon la revendication 2, **caractérisé en ce que** les étapes a/ à c/ sont répétées pour un deuxième point à la surface de la pièce.

8. Procédé selon la revendication 5, utilisant un dispositif selon la revendication 4, **caractérisé en ce qu'**il comprend une étape consistant à mesurer la réponse de la pièce dans la zone cible avec l'interféromètre de type Fabry-Pérot (230) avec une fréquence de coupure basse supérieure ou égale à 1 MHz.

## Patentansprüche

1. Vorrichtung zur zerstörungsfreien Prüfung eines Werkstücks, das insbesondere aus einem Verbundmaterial mit einer Faserverstärkung besteht, umfassend:
a - einen Generator (400) eines als Exzitationsstrahl bezeichneten Laserstrahls und Mittel (410) zum Erzeugen einer photoelastischen Spannung der Oberfläche des Werkstücks (401) in einer Exzitationszone mit Hilfe dieses Laserstrahls;
b - Mittel (200, 201) zum Erzeugen eines ersten, als Detektionsstrahl bezeichneten Laserstrahls (211), der geeignet ist, das Werkstück (401) in einer Zielzone zu beleuchten;
c - Mittel (200, 220) zum Erzeugen eines zweiten Detektionslaserstrahls (221), der als Referenzstrahl bezeichnet wird und von dem eine Charakteristik unabhängig von den Charakteristiken des Detektionslaserstrahls (211) geregelt werden kann;
d - ein photorefraktives Interferometer (230) mit zwei Wellen, umfassend einen photorefraktiven Kristall, der von dem Referenzlaserstrahl (221) gepumpt wird;
e - Mittel zum Sammeln des von der Zielzone reflektierten Strahls des ersten Detektionslasers und zum Führen desselben in das photorefraktive Interferometer (230);
f - Mittel zum Erzeugen, umfassend eine einzige Quelle, bestehend aus einem monolithischen Oszillator mit einer einzigen stabilisierten Frequenz vom diodengepumpten Typ Nd:YAG und zwei getrennten Verstärkerlasern (210, 220), um aus dieser Quelle (200) den Detektionslaserstrahl (211) und den Referenzlaserstrahl (221) zu erzeugen; und
g - Mittel zum Modifizieren, während eines Impulses des Detektionsstrahls, mindestens einer Charakteristik des Referenzlaserstrahls (221), um das Passband des photorefraktiven Interferometers (230) zwischen einer ersten unteren Grenzfrequenz größer oder gleich 1 MHz und einer zweiten unteren Grenzfrequenz kleiner 10 kHz einzustellen.

2. Vorrichtung nach Anspruch 1, **dadurch gekennzeichnet, dass** diese Abtastmittel (250, 450) zum Verschieben des Exzitationslaserstrahls und des ersten Detektionslaserstrahls (211) auf der Oberfläche des Werkstücks (401) umfasst, um ein Abtasten der Oberfläche desselben durchzuführen.

3. Vorrichtung nach Anspruch 1, **dadurch gekennzeichnet, dass** die Mittel zum Modifizieren des Referenzlaserstrahls auf die Intensität des Strahls wirken.

4. Vorrichtung nach Anspruch 1, **dadurch gekennzeichnet, dass** diese ferner ein Interferometer (230) vom konfokalen Typ Fabry-Pérot umfasst.

5. Verfahren zur Prüfung eines Werkstücks, das insbesondere aus einem Verbundmaterial mit einer Faserverstärkung besteht, unter Verwendung einer Vorrichtung nach Anspruch 1, umfassend die folgenden Schritte, die bestehen aus:
a - Erzeugen (510) einer photoelastischen Exzitation der Oberfläche des Werkstücks mit Hilfe des Exzitationslasers;
b - Messen (520) der Antwort auf diese Exzitation in der Zielzone, die von dem Detektionslaserstrahl (211) beleuchtet wird, durch Pumpen des photorefraktiven Interferometers mit einem Referenzsignal, so dass die Messung mit einer ersten unteren Grenzfrequenz größer als 1 MHz durchgeführt wird;
c - Modifizieren (521) des Referenzstrahls, um eine interferometrische Messung (530) mit Hilfe des photorefraktiven Interferometers mit einer zweiten Grenzfrequenz durchzuführen, die kleiner ist als die erste Grenzfrequenz;
wobei das Beleuchten (311) der Zielzone mit dem Detektionslaserstrahl während der Schritte a/ bis c/ fortgesetzt wird.

6. Verfahren nach Anspruch 5,**dadurch gekennzeichnet, dass** die Beleuchtungsintensität (311) der Zielzone während der Schritte a/ bis c/ konstant ist.

7. Verfahren nach Anspruch 5, unter Verwendung einer Vorrichtung nach Anspruch 2, **dadurch gekennzeichnet, dass** die Schritte a/ bis c/ für einen zweiten Punkt auf der Oberfläche des Werkstücks wiederholt werden.

8. Verfahren nach Anspruch 5, unter Verwendung einer Vorrichtung nach Anspruch 4, **dadurch gekennzeichnet, dass** dieses einen Schritt umfasst, der aus dem Messen der Antwort des Werkstücks in der Zielzone mit dem Interferometer (230) vom Typ Fabry-Pérot mit einer unteren Grenzfrequenz größer oder gleich 1 MHz besteht.

## Claims

1. Device for the non-destructive testing of a part, in particular made of a fibre-reinforced composite material, comprising
a. a generator (400) known as an excitation laser beam generator and means (410) for producing a photoelastic stress pattern of the surface of the part (401) in an excitation zone using this laser beam;
b. means (200, 210) for generating a first laser beam (211), known as detection laser beam, able to irradiate the part (401) in a target zone;
c. means (200, 220) for generating a second detection laser beam, known as reference laser beam (221), and one characteristic of which may be regulated independently of the characteristics of the detection laser beam (211);
d. a two-wave photorefractive interferometer (230) including a photorefractive crystal pumped by the reference laser beam (221);
e. means for collecting the beam reflected by the target zone of the first detection laser and directing it into the two-wave photorefractive interferometer (230);
f. generating means comprising a single source consisting of a monolithic single-frequency-stabilized diode-pumped Nd:YAG oscillator and two separate laser amplifiers (210, 220) for generating, using this source (200), the detection laser beam (211) and the reference laser beam (221) ; and
g. means for modifying, during a pulse of the detection beam, at least one characteristic of the reference laser beam (221) so as to adjust the bandwidth of the photorefractive interferometer (230) between a first low cut-off frequency higher than or equal to 1 MHz and a second low cut-off frequency lower than 10 kHz.

2. Device according to Claim 1, **characterized in that** it comprises scanning means (250, 450) for moving the excitation laser beam and the first detection laser beam (211) over the surface of the part (401) so as to perform a scan of the surface thereof.

3. Device according to Claim 1, **characterized in that** the means for modifying the reference laser beam act on the intensity of said beam.

4. Device according to Claim 1, **characterized in that** it furthermore comprises a confocal Fabry-Perot interferometer (230).

5. Method for testing a part, in particular made of a fibre-reinforced composite material, using a device according to Claim 1, comprising steps consisting in:
a. photo-elastically exciting (510) the surface of the part using the excitation laser;
b. measuring (520) the response to this excitation in the target zone irradiated by the detection laser beam (211) while pumping the photorefractive interferometer with a reference signal such that the measurement is carried out with a first low cut-off frequency higher than 1 MHz; and
c. modifying (521) the reference beam so as to carry out an interferometric measurement (530) using the photorefractive interferometer with a second cut-off frequency lower than the first cut-off frequency;
the illumination (311) of the target zone by the detection laser beam being continuous during steps a/ to c/.

6. Method according to Claim 5, **characterized in that** the intensity (311) of illumination of the target zone is constant during steps a/ to c/.

7. Method according to Claim 5, using a device according to Claim 2, **characterized in that** steps a/ to c/ are repeated for a second point on the surface of the part.

8. Method according to Claim 5, using a device according to Claim 4, **characterized in that** it comprises a step consisting in measuring the response of the part in the target zone with the Fabry-Perot interferometer (230) with a low cut-off frequency higher than or equal to 1 MHz.
